# EUROPÄISCHE PATENTANMELDUNG

(11) **EP 2 088 232 A1**
(43) Veröffentlichungstag der Anmeldung: **12.08.2009**
(21) Anmeldenummer: 09001499.4
(22) Anmeldetag: 04.02.2009
(51) Int. Cl.: D06F 37/00, F16J 15/32

(54) **Waschmaschine mit einem aus Kunststoff gefertigten Laugenbehälter**

(30) Priorität: 06.02.2008 DE 102008007861
(71) Anmelder: Miele & Cie. KG, 33332 Gütersloh (DE)
(72) Erfinder: Eckert, Norbert, 33102 Paderborn (DE); Kuka, Thorsten, 33334 Gütersloh (DE)

(57) **Zusammenfassung**

Die Erfindung betrifft eine Waschmaschine (1) mit einem aus Kunststoff gefertigten Laugenbehälter (2) und einer darin drehbar gelagerten Trommel (3), wobei zur drehbaren Lagerung der Trommel (3) an deren Boden (4) ein Wellenzapfen (5) befestigt ist, der in einer am Laugenbehälterboden (6) angeordneten, als Lagergehäuse (7) ausgebildeten Öffnung (8) mittels mindestens zwei Lagern (9,10) drehbar eingebunden ist, wobei zur Abdichtung der zum Trommelboden (4) weisenden Öffnung (8) des Lagergehäuses (7) eine Dichtungsanordnung (11) vorgesehen ist, die im Wesentlichen aus einem Radialwellendichtring (12) an der Gehäusewandöffnung (13) und einem auf dem Wellenzapfen (5) unter Presspassung aufgesetzten Laufring (14) besteht. Gemäß der Erfindung sind zur Sicherung der Dichtungsanordnung (11) an die als Kragenrand (15) ausgebildete Öffnung (8) des Lagergehäuses (7) Klammerelemente (16) axial aufsetzbar, welche ein Herauswandern des Radialwellendichtringes (12) aus dem Öffnungsbereich des Lagergehäuses (7) im Betriebszustand der Waschmaschine (1) unterbinden.

## Beschreibung

Die Erfindung betrifft eine Waschmaschine mit einem aus Kunststoff gefertigten Laugenbehälter und einer darin drehbar gelagerten Trommel, wobei zur drehbaren Lagerung der Trommel an deren Boden ein Wellenzapfen befestigt ist, der in einer am Laugenbehälterboden angeordneten, als Lagergehäuse ausgebildeten Öffnung mittels mindestens zwei Lagern drehbar eingebunden ist, wobei zur Abdichtung der zum Trommelboden weisenden Öffnung des Lagergehäuses eine Dichtungsanordnung vorgesehen ist, die im Wesentlichen aus einem Radialwellendichtring an der Gehäusewandöffnung und einem auf dem Wellenzapfen unter Presspassung aufgesetzten Laufring besteht.

Aus dem Stand der Technik gemäß der EP 1 514 966 A1 ist eine derartig beschriebene Dichtungsanordnung bekannt. Denn die zur Lagerung des Wellenzapfens einer Waschmaschinentrommel verwendeten Wälzlager können nur störungsfrei arbeiten und hohe Standzeiten erreichen, wenn sie durch wirksame Dichtung während der gesamten Betriebszeit geschützt werden. Das Eindringen von Schmutz und das Austreten von Schmierstoff ist dabei zu verhindern. Auch ist es von besonderer Wichtigkeit, dass der Eintritt von Kondenswasser und Lauge aus dem Laugenbehälter in das Lager vermieden wird.

Hierzu ist es bekannt, dass vor dem Lager Radialwellendichtringe eingesetzt werden. Diese Radialwellendichtringe haben jedoch insbesondere bei Waschmaschinen, die mit einem Kunststofflaugenbehälter ausgestattet sind, den Nachteil, dass der Wellendichtring zum Herauswandern aus dem Lagergehäuse neigt. Dies wird durch das Selbstverhalten des Kunststoffsitzes, in dem der Wellendichtring gelagert wird, und durch eine fehlende axiale Abstützung begünstigt. Infolge des Herauswanderns des Wellendichtringes kommt es zu Undichtigkeiten des Laugenbehälters, was zum Versagen der Lagerung führt. Dies kann den Austausch des ganzen Laugenbehälters zur Folge haben. Die Kosten der Reparatur überschreiten dann häufig den Restwert des Waschautomaten.

Aus der DE 10 2005 062 891 B3 ist eine Dichtungsanordnung bekannt, bei der das Dichtungselement in einem Halteteil komplett aufgenommen und gehalten ist. Das Halteteil besitzt in Axialrichtung Rastnasen, die in einer umlaufenden Rille im feststehenden Lagerring verrasten. Diese Anordnung bietet zwar eine verbesserte Befestigung, jedoch kann das Herauswandern des Wellendichtrings nicht verhindert werden. Aufgrund von Verwindungen in der Laugenbehälterwand werden diese dynamischen Verformungen auf das Halteteil übertragen, so dass es aus seinem Sitz heraus springen kann.

Der Erfindung stellt sich somit das Problem, eine Waschmaschine mit einem vorzugsweise aus Kunststoff gefertigten Laugenbehälter mit einer darin drehbar gelagerten Trommel bereitzustellen, die eine Dichtungsanordnung aufweist, welche an der Gehäusewandöffnung stabil eingefasst ist.

Erfindungsgemäß wird dieses Problem mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass, ohne die Form des Laugenbehälters zu verändern, einfach während der Montage Klammerelemente auf den Kragenrand des Lagergehäuses aufgeschoben werden, die eine sichere Lage der Dichtungsanordnung gewährleisten. Die Klammerelemente werden einerseits gegen das Verkippen von der einen Seite am Laugenbehälter gestützt, wobei andererseits eine Abstützung von der anderen Seite am Wellendichtring gegeben ist. Bei einer ausreichenden Vorspannung sichern die Klammerelemente den Wellendichtring dadurch axial gegen das Herauswandern. In der Regel werden mehrere symmetrisch angeordnete Klammerelemente mit einem Wellendichtring eingesetzt. Die Klammerelemente werden hierbei aus einem korrosionsbeständigen Blech hergestellt.

Erfindungsgemäß sind hierzu zur Sicherung der Dichtungsanordnung an die als Kragenrand ausgebildeten Öffnung des Lagergehäuses Klammerelemente axial aufsetzbar, welche ein Herauswandern des Radialwellendichtringes aus dem Öffnungsbereich des Lagergehäuses im Betriebszustand der Waschmaschine unterbinden. Somit wird erreicht, dass Undichtigkeiten des Laugenbehälters und ein Versagen der Lagerung unterbunden wird. Nach einer vorteilhaften Weiterbildung der Erfindung ist das einzelne Klammerelement im Wesentlichen U-förmig ausgebildet, wobei dessen Erstreckung eine dem Kragenrand entsprechend gebogene Form aufweist. Dabei umgibt das U-förmige Klammerelement mit seinen Schenkeln beidseits den Kragenrand, wobei an dem zum Radialwellendichtring weisenden Schenkel eine abgewinkelte Anlagefläche und entsprechend an dem zum Lagergehäuse weisenden Schenkel eine ebenfalls abgewinkelte Stützfläche angeformt bzw. herausgeformt ist. Somit ergibt sich für das Klammerelement im aufgesetzten Zustand eine formschlüssige Einbindung vom Lagergehäuse zum Wellendichtring. Um insbesondere den Wellendichtring hinreichend zu sichern, wird vorgeschlagen, dass wenigstens drei Klammerelemente im Wesentlichen gleichmäßig verteilt am umlaufenden Kragenrand angeordnet sind.

In Weiterbildung der Erfindung ist an wenigstens einem der Schenkelflächen ein gegen die Aufsteckrichtung des Klammerelementes wirkendes Sicherungselement vorgesehen. Das Sicherungselement umfasst hierbei ein aus der Schenkelfläche herausgestanztes Federstreifenelement. Das Federstreifenelement als solches ragt hierbei unter einer Winkellage mit seinem freien Ende in den Raum zwischen den Schenkeln.

Nach einer besonders vorteilhaften Weiterbildung ist das Federstreifenelement aus der Schenkelfläche des zum Radialwellendichtring weisenden Schenkel herausgestanzt. In Weiterbildung wird dabei vorgesehen, dass an beiden Schenkelflächen jeweils ein Federstreifenelement vorgesehen ist. Es versteht sich nun von selbst, dass, wenn das Klammerelement auf den Kragenrand gedrückt wird, die Federstreifen sich beim Eindrückvorgang in ihrer Federung zurück bewegen, so dass ein Aufdrücken möglich wird. Treten nun seitens des Wellendichtringes Kräfte auf, so graben sich die Federstreifenelemente in die Seitenwände des Kragenrandes und verhindern somit ein selbsttätiges Lösen der Klammerelemente von dem Kragenrand.

Nach einer besonders vorteilhaften Ausgestaltung ist das Klammerelement aus einem Federstahlblech bzw. einem korrosionsbeständigen Blech gefertigt.

Die Erfindung betrifft auch eine Sicherungseinrichtung für eine Dichtungsanordnung eines Wellenzapfens für eine Trommel einer Waschmaschine nach einem oder mehreren der beschriebenen Merkmale.

Ein Ausführungsbeispiel der Erfindung ist in den Zeichnungen rein schematisch dargestellt und wird nachfolgend näher beschrieben. Es zeigen:
- Figur 1: eine geschnittene Seitenansicht einer Waschmaschine;
- Figur 2: eine geschnittene Detailansicht des Lagergehäuses mit eingebundenen Wellenzapfen;
- Figur 3: eine Detailansicht der Dichtungsanordnung an der Gehäusewandöffnung;
- Figur 4: eine weitere Darstellung der Einbindung der Dichtungsanordnung in perspektivischer Darstellung, gemäß der Figur 3;
- Figur 5: eine Draufsicht auf die Gehäusewandöffnung mit Dichtungsanordnung und Klammeranordnung;
- Figur 6: eine perspektivische Darstellung mit angesetzten Klammerelementen und
- Figur 7: eine Detailansicht eines Klammerelementes.

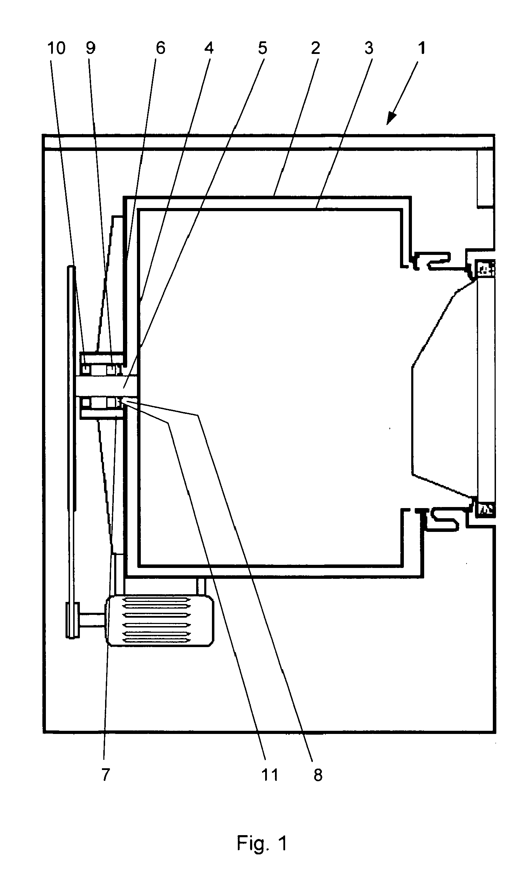

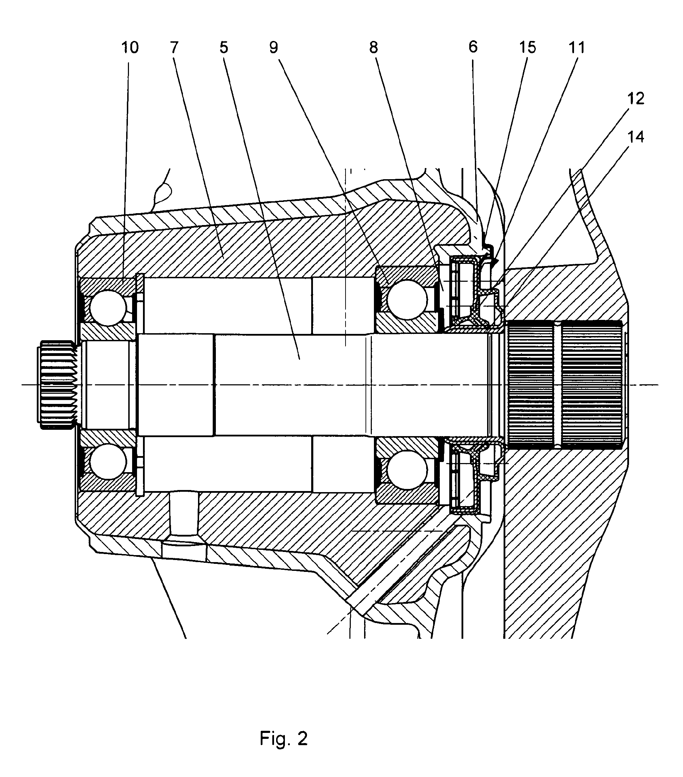

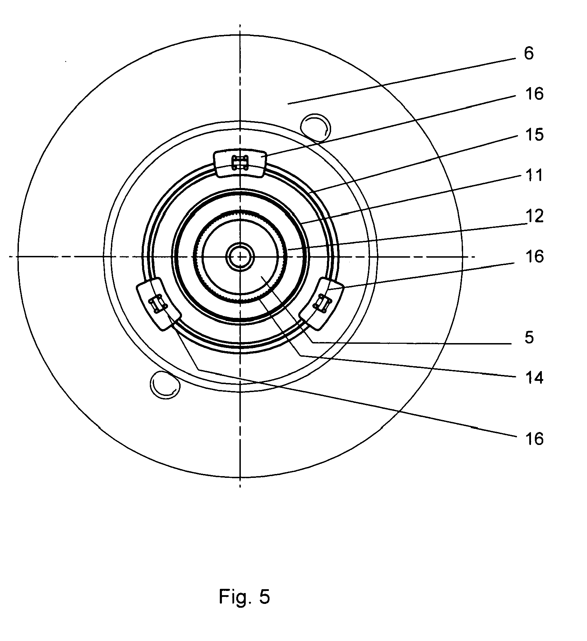

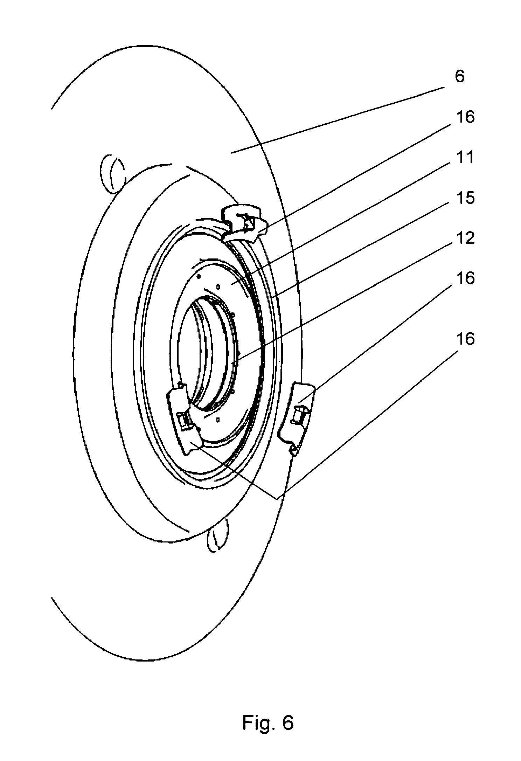

Die Figur 1 zeigt in der geschnittenen Seitenansicht eine Waschmaschine 1 mit einem vorzugsweise aus Kunststoff gefertigten Laugenbehälter 2 und einer darin drehbar gelagerten Trommel 3, wobei zur drehbaren Lagerung der Trommel 3 an deren Boden 4 ein Wellenzapfen 5 befestigt ist. Dabei ist der Wellenzapfen 5 in einer am Laugenbehälterboden 6 angeordneten, als Lagergehäuse 7 ausgebildeten Öffnung 8 mittels wenigstens zwei Lagern 9 und 10 drehbar eingebunden. Zur Abdichtung der zum Trommelboden 4 weisenden Öffnung 8 des Lagergehäuses 7 ist eine Dichtungsanordnung 11 vorgesehen, wie sie in den Figuren 2 bis 6 näher dargestellt ist.

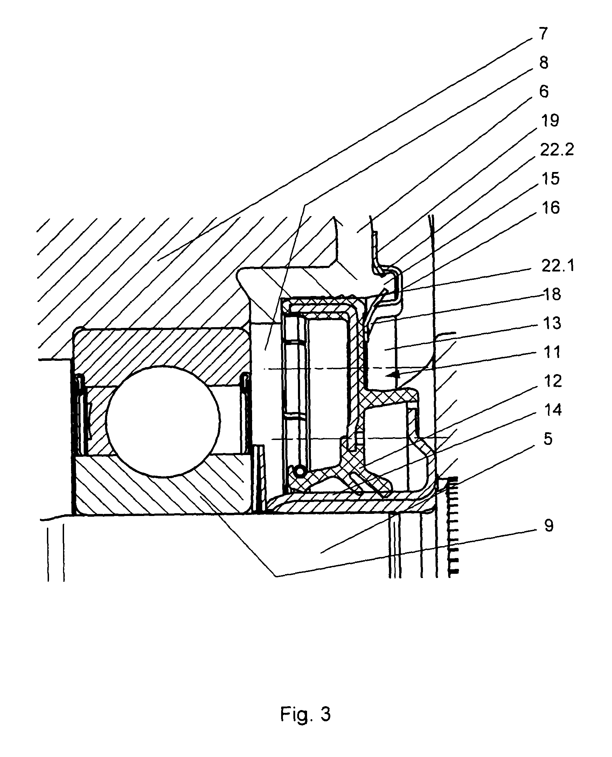

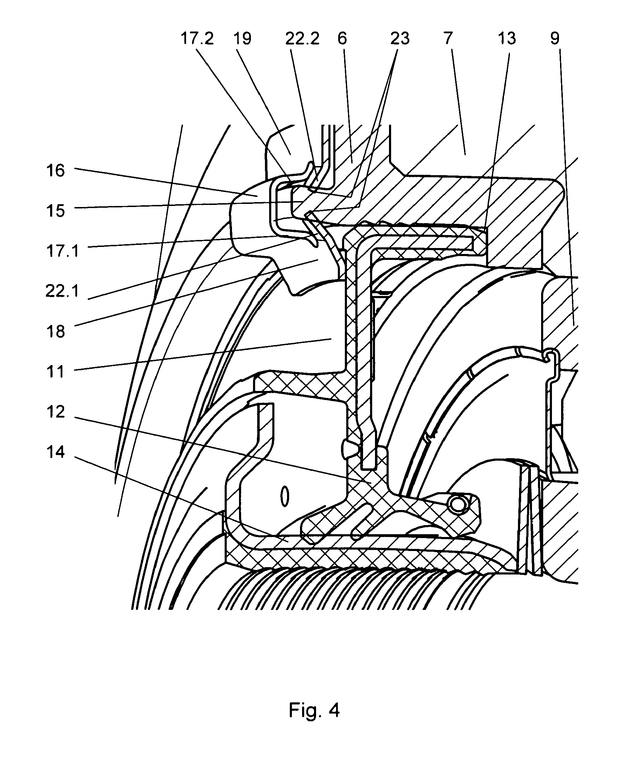

Dabei besteht die Dichtungsanordnung 11, besser zu erkennen in den Figuren 3 und 4, im Wesentlichen aus einem Radialwellendichtring 12, der an der Gehäusewandöffnung 13 anliegt, und einem auf dem Wellenzapfen 5 unter Pressspannung aufgesetzten Laufring 14. Wie insbesondere in den Figuren 3, 4 und 5 zu erkennen ist, sind zur Sicherung der Dichtungsanordnung 11 an die als Kragenrand 15 ausgebildete Öffnung 8 des Lagergehäuses 7 Klammerelemente 16 axial aufsetzbar. Diese Klammerelemente 16 unterbinden ein Herauswandern des Radialwellendichtringes 12 aus dem Öffnungsbereich des Lagergehäuses 7 im Betriebszustand der Waschmaschine 1. Aus den Figuren 3, 4 und 7 wird deutlich, dass das einzelne Klammerelement 16 im Wesentlichen U-förmig ausgebildet ist, wobei dessen Erstreckung eine dem Kragenrand 15 entsprechend gebogene Form aufweist. Dabei umgibt das U-förmige Klammerelement 16 mit seinen Schenkeln 17.1 und 17.2 beidseits den Kragenrand 15, wobei an dem zum Radialwellendichtring 12 weisenden Schenkel 17.1 eine abgewinkelte Anlagefläche 18 und eine entsprechend an dem zum Lagergehäuse 7 weisenden Schenkel 17.2 eine ebenfalls abgewinkelte Stützfläche 19 angeformt bzw. herausgeformt ist. Dies ist insbesondere in der Figur 4 deutlich zu erkennen, wobei hier in der Perspektive deutlich wird, wie das Klammerelement 16 auf den Kragenrand 15 aufgesetzt wird, so dass die Schenkel 17.1 und 17.2 mit ihren herausgeformten bzw. angeformten Anlageflächen 18 bzw. Stützflächen 19 insbesondere den Radialwellendichtring 12 fest in dem Öffriungsbereich halten bzw. einpressen.

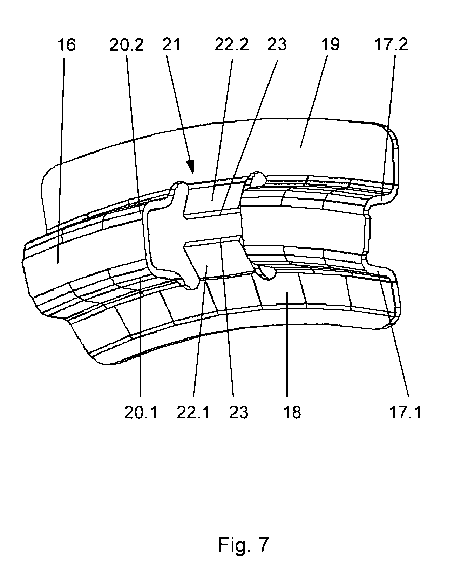

Dabei ist an wenigstens einem der Schenkelflächen 20.1 bzw. 20.2 ein gegen die Aufsteckrichtung des Klammerelementes 16 wirkendes Sicherungselement 21 vorgesehen. Das Sicherungselement 21 umfasst hierbei ein aus der Schenkelfläche 20.1 herausgestanztes Federstreifenelement 22. Das Federstreifenelement 22 ragt hierbei unter einer Winkellage mit seinem freien Ende 23 in den Raum zwischen den Schenkeln 17.1 und 17.2. Wie insbesondere aus der Figur 7 deutlich wird, ist hierbei das Federstreifenelement 22 aus der Schenkelfläche 20.1 und 20.2 der Schenkel 17.1 und 17.2 herausgestanzt. Dabei ist es besonders vorteilhaft, wenn an beiden Schenkelflächen, hier 20.1 und 20.2, jeweils ein Federstreifenelement 22.1 und 22.2 vorgesehen wird, wie dies aus den Figuren 4 und 7 deutlich wird. Denn nun versteht es sich von selbst, dass, wenn das Klammerelement 16 mit seinen beiden in den Freiraum ragenden Federstreifenelementen 22.1 und 22.2 auf den Kragenrand 15 gedrückt wird, die beiden Federstreifenelemente 22.1 und 22.2 leicht zurückspringen, so dass ein sich klemmendes Aufdrücken des Klammerelementes 16 vollzogen werden kann. Die freien Enden der Federstreifenelemente 22.1 und 22.2 graben sich dabei in die Seitenwände des kragenförmigen Randes 15 ein, so dass eine unlösbare Verbindung geschaffen wird, mit dem Ziel, hier die hinreichende Kraft aufzubringen, um die stützende Anlage an dem Radialwellendichtring 12 zu vollziehen.

Somit ist gewährleistet, dass insbesondere im dynamischen Betrieb der Waschmaschine 1 ein Wandern des Radialwellendichtrings 12 gänzlich unterbunden wird. Die Klammerelemente 16, die hier im Wesentlichen gleichmäßig verteilt auf dem Umfang des Kragenrandes 15 angeordnet sind, bieten somit eine umfassende Stützanlage für den Radialwellendichtring 12.

Nach einer besonders vorteilhaften Ausgestaltung der Erfindung kann dabei das Klammerelement 16 aus einem Federstahlblech bzw. einem korrosionsbeständigen Blech gefertigt sein.

## Patentansprüche

1. Waschmaschine (1) mit einem aus Kunststoff gefertigten Laugenbehälter (2) und einer darin drehbar gelagerten Trommel (3), wobei zur drehbaren Lagerung der Trommel (3) an deren Boden (4) ein Wellenzapfen (5) befestigt ist, der in einer am Laugenbehälterboden (6) angeordneten, als Lagergehäuse (7) ausgebildeten Öffnung (8) mittels mindestens zwei Lagern (9, 10) drehbar eingebunden ist, wobei zur Abdichtung der zum Trommelboden (4) weisenden Öffnung (8) des Lagergehäuses (7) eine Dichtungsanordnung (11) vorgesehen ist, die im Wesentlichen aus einem Radialwellendichtring (12) an der Gehäusewandöffnung (13) und einem auf dem Wellenzapfen (5) unter Presspassung aufgesetzten Laufring (14) besteht,
**dadurch gekennzeichnet,**
**dass** zur Sicherung der Dichtungsanordnung (11) an die als Kragenrand (15) ausgebildete Öffnung (8) des Lagergehäuses (7) Klammerelemente (16) axial aufsetzbar sind, welche ein Herauswandern des Radialwellendichtringes (12) aus dem Öffnungsbereich des Lagergehäuses (7) im Betriebszustand der Waschmaschine (1) unterbinden.

2. Waschmaschine nach Anspruch 1,
**dadurch gekennzeichnet,**
**dass** das einzelne Klammerelement (16) im Wesentlichen U-förmig ausgebildet ist, wobei dessen Erstreckung eine dem Kragenrand (15) entsprechend gebogene Form aufweist.

3. Waschmaschine nach Anspruch 2,
**dadurch gekennzeichnet,**
**dass** das U-förmige Klammerelement (16) mit seinen Schenkeln (17.1, 17.2) beidseits den Kragenrand (15) umgibt, wobei an dem zum Radialwellendichtring (12) weisenden Schenkel (17.1) eine abgewinkelte Anlagefläche (18) und entsprechend an dem zum Lagergehäuse (7) weisenden Schenkel (17.2) eine ebenfalls abgewinkelte Stützfläche (19) angeformt bzw. herausgeformt ist.

4. Waschmaschine nach Anspruch 1,
**dadurch gekennzeichnet,**
**dass** wenigstens drei Klammerelemente (16) im Wesentlichen gleichmäßig verteilt am umlaufenden Kragenrand (15) angeordnet sind.

5. Waschmaschine nach Anspruch 3,
**dadurch gekennzeichnet,**
**dass** an wenigstes einem der Schenkelflächen (20.1, 20.2) ein gegen die Aufsteckrichtung des Klammerelementes (16) wirkendes Sicherungselement (21) vorgesehen ist.

6. Waschmaschine nach Anspruch 5,
**dadurch gekennzeichnet,**
**dass** das Sicherungselement (21) ein aus der Schenkelfläche (20.1, 20.2) herausgestanztes Federstreifenelement (22) umfasst.

7. Waschmaschine nach Anspruch 6,
**dadurch gekennzeichnet,**
**dass** das Federstreifenelement (22) unter einer Winkellage mit seinem freien Ende (23) in den Raum zwischen den Schenkeln (17.1, 17.2) ragt.

8. Waschmaschine nach Anspruch 7,
**dadurch gekennzeichnet,**
**dass** das Federstreifenelement (22) aus der Schenkelfläche (20.1) des zum Radialwellendichtring (12) weisenden Schenkel (17.1) herausgestanzt ist.

9. Waschmaschine nach Anspruch 8,
**dadurch gekennzeichnet,**
**dass** an beiden Schenkelflächen (20.1, 20.2) jeweils ein Federstreifenelement (22.1, 22.2) vorgesehen ist.

10. Waschmaschine nach Anspruch 1 bis 9,
**dadurch gekennzeichnet,**
**dass** das Klammerelement (16) aus einem Federstahlblech bzw. einem korrosionsbeständigen Blech gefertigt ist.

11. Sicherungseinrichtung für eine Dichtungsanordnung eines Wellenzapfens für eine Trommel einer Waschmaschine nach einem oder mehreren der Ansprüche 1 bis 10.
